# EUROPÄISCHE PATENTSCHRIFT

(11) **EP 2 007 096 B1**
(45) Veröffentlichungstag und Bekanntmachung des Hinweises auf die Patenterteilung: **30.12.2015**
(21) Anmeldenummer: 07011932.6
(22) Anmeldetag: 19.06.2007
(51) Int. Cl.: H04L 29/08, G06F 17/30

(54) **Optimierung der Darstellung von über ein Kommunikationsnetzwerk übermittelten Informationen**
Optimisation of data representation transmitted by a communications network
Optimisation de la représentation d'informations transmises par un réseau de communication

(43) Veröffentlichungstag der Anmeldung: 24.12.2008
(73) Patentinhaber: Hurra Communications BV, 1103 Amsterdam (NL)
(72) Erfinder: Schweier, René, 70599 Stuttgart (DE)
(74) Vertreter: DREISS Patentanwälte PartG mbB

(56) Entgegenhaltungen:
- WO-A-03/021479
- GB-A- 2 366 037
- US-A1- 2002 103 876
- US-A1- 2002 112 035
- US-A1- 2004 098 451

## Beschreibung

Die Erfindung betrifft eine Verfahren zur Bestimmung der Darstellung von von einem Server an einen Client über ein Kommunikationsnetzwerk zu übermittelnden Informationen, wobei jeder der zu übermittelnden Informationen mindestens eine Informationseigenschaft zugeordnet ist.

Die Erfindung betrifft auch ein Verfahren zur Übermittlung von Informationen von einem Server an einen Client, bei dem von dem Server in Abhängigkeit von einer Informationsanforderung zu übermittelnde Informationen ausgewählt werden.

Die Erfindung betrifft ferner einen Server in einem Kommunikationssystem, wobei der Server Mittel zur Auswahl von angeforderten Informationen aufweist.

Die Erfindung betrifft auch ein Client-Server-System, das einen über ein Kommunikationsnetzwerk mit einem Server verbindbaren Client umfasst.

Insbesondere betrifft die Erfindung auch ein Computerprogramm, das auf einem Server ablauffähig ist, sowie ein Computerprogramm, das auf einem Client-Server System ablauffähig ist.

Als Server wird beispielsweise ein mit einem Kommunikationsnetzwerk verbundener Computer bezeichnet, auf dem eine Software abläuft, so dass der Server geeignet ist, bestimmte Dienste bereitzustellen. Diese Dienste können beispielsweise das Bereitstellen von Informationen oder Ressourcen sein. Die Dienste werden typischerweise durch einen sogenannten Client in Anspruch genommen. Dazu wird von dem Client mittels des Kommunikationsnetzwerks, beispielsweise dem Internet, eine Anfrage an den Server gestellt. Der Server wertet die eingehende Anfrage aus, überprüft ggf. eine Berechtigung des Clients zum Stellen der Anfrage und übermittelt der Anfrage entsprechende Informationen.

Häufig werden Informationen von einem Server in Form von sogenannten Netzwerkseiten (auch Internetseiten) einem Client zur Verfügung gestellt. Zur Beschreibung des Inhalts einer derartigen Netzwerkseite wird häufig eine Seitenbeschreibungssprache, beispielsweise HTML (Hypertext Markup Language) verwendet. Dies erlaubt es, den Inhalt, also die darzustellenden Informationen, sowie die Darstellung der Informationen in der Netzwerkseite, beispielsweise mittels eines sogenannten HTML-Dokuments, zu beschreiben. Fordert der Client Informationen von dem Server an, so übermittelt der Server ein die angeforderten Informationen enthaltendes HTML-Dokument an den Client. Sollen die dem Client mittels des HTML-Dokuments übermittelten Informationen einem Benutzer des Clients dargestellt werden, so wird die Netzwerkseite, beziehungsweise das HTML-Dokument, einem speziellen Computerprogramm, beispielsweise einem Browser, zugeführt, das in der Lage ist, HTML-Dokumente zu interpretieren und mittels einer grafischen Oberfläche auf einem Computermonitor darzustellen.

Die Patentschrift GB 2 366 037 A (IBM [US]), 27. Februar 2002, befasst sich mit dem Problem der Darstellung von Informationen in einem Webbrowser in Abhängigkeit vom Endgerätetyp.

Die von dem Server an den Client übermittelten Netzwerkseiten können bereits vor der Anforderung durch den Client erzeugt und an geeigneter Stelle abgespeichert worden sein. Derartige Netzwerkseiten werden als statische Netzwerkseiten bezeichnet. Häufig wird von einem Client jedoch eine sehr spezifische Anfrage an den Server gestellt, so dass dieser die angeforderten Informationen in Abhängigkeit von der Anfrage auswählt und eine diese Informationen enthaltende Netzwerkseite dynamisch erzeugt. Häufig enthalten die zu übermittelnden Netzwerkseiten unterschiedlichste Informationsarten, beispielsweise Text-, Musik- oder Bildinformationen. Ferner enthalten Netzwerkseiten häufig Verweise, sogenannten Links, zu weiteren Informationen beziehungsweise Netzwerkseiten. Insbesondere wenn die von dem Server an den Client zu übermittelnden Informationen auf mehreren Netzwerkseiten verteilt sind, werden einzelnen dieser Seiten Links zu weiteren Seiten hinzugefügt, so dass diese weiteren Netzwerkseiten durch Aktivieren des Links angefordert werden können. Links werden auch häufig auf sogenannten Startseiten oder home-pages verwendet, wobei derartige Startseiten gewöhnlich eine Art Inhaltsverzeichnis beinhalten oder eine Übersicht über wichtige Themengebiete, zu denen weitere Informationen beziehungsweise Netzwerkseiten angefordert werden können.

Jede weitere Anforderung von Netzwerkseiten beziehungsweise von auf weiteren Netzwerkseiten dargestellten Informationen erhöht jedoch die Belastung des Kommunikationsnetzwerks, da sowohl eine erneute Anfrage als auch eine erneute Antwort übermittelt werden müssen. Ferner wird dadurch die Belastung des Servers erhöht, da dieser eine Mehrzahl von Anfragen bearbeiten muss.

Um die Anzahl von folgenden Anfragen zu reduzieren und den Server zu entlasten ist es bekannt, eine besonders große Anzahl von Informationen mittels nur weniger oder nur einer einzigen Netzwerkseite an den Client zu übermitteln. Dies hat jedoch den Nachteil, dass die so dargestellten Informationen meist unübersichtlich sind und eine Navigation innerhalb der Informationen nur unzureichend möglich ist. Ferner hat dies den Nachteil, dass mit jeder Anfrage eine nicht unbedeutende Menge von Informationen an den Client übertragen wird, was wiederum die Belastung des Kommunikationsnetzes erhöht.

Ist der Server als Suchmaschine ausgebildet und fordert der Client von der Suchmaschine Informationen mittels einer einen Suchbegriff beinhaltenden Suchanfrage an, so ermittelt die Suchmaschine nach einem vorgebaren Algorithmus anhand des Suchbegriffs Informationen, die mit dem Suchbegriff assoziiert werden und erzeugt automatisch eine dynamische Netzwerkseite, die Links zu den ermittelten Informationen umfasst. Hierbei ist es bekannt, die Reihenfolge der dargestellten Links beziehungsweise Informationen in Abhängigkeit davon zu bestimmen, wie häufig die Informationen bereits von anderen Clients angefordert worden sind, so dass die am häufigsten angeforderte Information an erster Stelle stehen. Da davon ausgegangen wird, dass besonders häufig angeforderte Informationen eine höhere allgemeine Relevanz haben, werden die möglicherweise relevanten Informationen zuerst an den Client übermittelt. Das Kommunikationsnetzwerk wird dadurch entlastet, da die zuerst gesendeten Informationen im statistischen Mittel von höherer Relevanz waren und von einer Vielzahl von Clients keine weiteren Suchergebnisse zu einem vorgegebenen Suchbegriff angefordert werden.

Das von den Suchmaschinen bekannte Verfahren wird häufig auch bei so genannten Produktsuchmaschinen angewendet. Produktsuchmaschinen sind beispielsweise einem Online-Shop zugeordnet und ermöglichen die Suche nach einem oder mehreren von dem Online-Shop zum Kauf angebotenen Produkten.

Derartige Verfahren zur optimierten Darstellung von Informationen haben jedoch den Nachteil, dass diese nur eine ganz bestimmte Art von Informationen, beispielsweise nur Links, in einer bezüglich einer wahrscheinlichen Relevanz optimierten Art darstellen können. Ferner haben diese Verfahren den Nachteil, dass diese bei jeder Anforderung von Informationen erneut durchgeführt werden müssen und somit im statistischen Mittel zwar zur einer Reduzierung der Belastung des Kommunikationsnetzwerks führen, jedoch auch zu einer Erhöhung der Belastung des Servers führen.

Es ist daher Aufgabe der Erfindung, eine Möglichkeit bereitzustellen, um eine besonders flexible Optimierung der Darstellung von Informationen, die von einem Server an einen Client übermittelt werden sollen, zu ermöglichen. Ferner ist es Aufgabe der Erfindung, durch eine verbesserte Optimierung der Darstellung von Informationen eine nochmals weitere Reduzierung der Belastung des Kommunikationsnetzwerks und der Belastung des Servers zu erreichen.

### Kurze Beschreibung der Erfindung

Die Aufgabe wird durch ein Verfahren zur Bestimmung der Darstellung von von einem Server an einen Client über ein Kommunikationsnetzwerk zu übermittelnden Informationen gelöst. Hierbei kann die Darstellung einer Information insbesondere Eigenschaften bezüglich der visuellen Darstellung der Information selbst als auch bezüglich der absoluten Position der Information innerhalb einer Netzwerkseite oder der relativen Position der Information zu anderen Informationen beschreiben.

Die Erfindung wird durch die unabhängigen Ansprüche repräsentiert. Weitere vorteilhafte Aspekte werden durch die abhängigen Ansprüche verkörpert.

Jeder der zu übermittelnden Informationen ist mindestens eine Informationseigenschaft zugeordnet. Eine Informationseigenschaft kann beispielsweise beschreiben, ob die Information eine Hintergrundinformation, eine aktuelle Nachricht oder eine Werbeinformation betrifft. Ferner kann die Informationseigenschaft eine Informationsart oder ein Datenformat beschreiben, also beispielsweise ob die Information eine Textinformation, eine Grafik, eine Videoinformation oder eine Bildinformation ist und in welchem Format die Information codiert ist. Insbesondere kann die Informationseigenschaft auch eine die Aktualität beschreibende Angabe oder eine eine Priorität beschreibende Angabe darstellen. Eine Informationseigenschaft kann ferner ein der Information zugeordnetes Thema beschreiben. Ist der Server ein Online-Shop, so kann die Informationseigenschaft beispielsweise auch beschreiben, ob die Information ein Produkt, einen Preis, eine Lieferzeit, eine Rabattierung, eine Verfügbarkeit eines Produkts oder ein Zusatzprodukt beschreibt. Eine Informationseigenschaft kann insbesondere auch die Beziehung zu anderen Informationen beschreiben, also ob diese Information regelmäßig zusammen mit einer anderen Information angezeigt werden soll, ob diese Information listenartig dargestellt werden soll, oder ob diese Information eine bezüglich anderen Informationen relative oder absolute Priorität aufweist. Ist der Server als Online-Shop ausgebildet, so kann die Informationseigenschaft beispielsweise anzeigen, dass die Information ein Produkt beschreibt, zu dieser Information ein Link zu weiteren Informationen dargestellt werden soll, das Produkt rabattfähig ist und/oder dass das Produkt nur einer bestimmten Käuferschicht angeboten werden darf.

Eine Informationseigenschaft ist also eine Metainformation, die mindestens eine Eigenschaft der Information beschreibt.

Bei dem Verfahren wird automatisch in Abhängigkeit von einem vorgegebenen Optimierungsziel eine Menge von generischen Darstellungsregeln ermittelt. Ein Optimierungsziel kann beispielsweise angeben, ob eine möglichst geringe Online-Zeit eines Clients oder eines Benutzers des Clients erreicht werden soll, ob eine möglichst geringe Datenmenge übertragen werden soll, ob eine möglichst hohe Lesbarkeit der übertragenen Informationen erreicht werden soll, ob eine möglichst geringe Anzahl von Anfragen nach weiterführenden Informationen erreicht werden soll, ob die Spitzenbelastung des Servers möglichst gering gehalten werden soll oder ob zu jeder Zeit eine möglichst große Anzahl von Informationsanfragen gleichzeitig bearbeitet werden soll. Selbstverständlich sind eine Vielzahl weiterer Optimierungsziele vorstellbar. Insbesondere ist es auch vorstellbar, dass ein Optimierungsziel mehrere Komponenten beziehungsweise zu optimierende Größen umfasst.

Eine generische Darstellungsregel gibt eine Darstellungseigenschaft an, die nicht auf eine konkrete Information bezogen ist, sondern die auf mehrere unterschiedliche Informationen angeordnet werden kann. Für eine einen Text umfassende Information kann eine generische Darstellungsregel beispielsweise vorgeben, dass der Text in einer bestimmten Farbe oder einer bestimmten Zeichengröße dargestellt werden soll. Eine derartige generische Darstellungsregel kann damit auf alle Informationen angewendet werden, die einen Text umfassen. Vorzugsweise kann mindestens eine generische Darstellungsregel mindestens einer Informationseigenschaft zugeordnet werden. Eine Informationseigenschaft beschreibt hierbei beispielsweise, dass die Information einen Text umfasst, eine Textinformation ist oder dass die Information Textzeichen enthält. Dies ermöglicht es besonders einfach festzustellen, welche generischen Darstellungsregeln auf welche Informationen anwendbar sind. Beispielsweise kann eine generische Darstellungsregel eine Textfarbe beschreiben und sich damit auf alle Informationen beziehen, deren Informationseigenschaft angibt, dass die Information eine Textinformation ist.

Eine generische Darstellungsregel kann auch angeben, dass jede Textinformation, die ein Produkt beschreibt und jede Grafik, die ein Produkt abbildet, eingerahmt dargestellt werden soll, dass eine derartige Grafik in einer bestimmten Größe oder mit einem bestimmten Skalierungsfaktor dargestellt werden soll oder dass die zu übermittelnde Information mit höchster Priorität an einer bestimmten Stelle und stets rot unterstrichen dargestellt werden soll. Generische Darstellungsregeln beschreiben beispielsweise auch eine Zeichenart, eine Sortierung, eine graphische Ausgestaltung, eine relative Anordnung zu anderen Informationen oder eine relative Anordnung bezüglich der Netzwerkseite. Ist der Server als ein Online-Shop ausgebildet, so können generische Darstellungsregeln aber vorgeben, dass für eine bestimmte Warengruppe ein bestimmter Rabatt dargestellt werden soll oder dass der Verkaufspreis bestimmter Produkte um einen bestimmten Betrag oder Anteil reduziert oder erhöht werden soll. Generische Darstellungsregeln können beispielsweise auch vorgeben, dass Informationen, die beispielsweise als aktivierbarer Link oder eine aktivierbare Schaltfläche (sog. Button) dargestellt werden, eine bestimmte Aktion zugeordnet werden soll.

Insbesondere können generische Darstellungsregeln auch vorgeben, dass darzustellenden Informationen andere Informationen zugeordnet dargestellt werden sollen. Ist der Server ein Online-Shop so kann damit erreicht werden, dass automatisch einem Produkt ein Link zugeordnet und dargestellt wird und eine Aktivierung des Links eine vorgebbare Aktion auslöst.

Eine generische Darstellungsregel ist damit jedenfalls unabhängig von einer bestimmten zu übermittelnden Information, kann aber einer Informationsart und insbesondere einer Informationseigenschaft zugeordnet sein.

Eine Anwendung der generischen Darstellungsregeln auf die Informationen ermöglicht dann, dass die Darstellung der Informationen gemäß der generischen Darstellungsregeln verändert wird. Dabei finden für eine darzustellende Information jedenfalls diejenigen generischen Darstellungsregeln Anwendung, die sich auf eine Informationseigenschaft der darzustellenden Information beziehen. Andere generische Darstellungsregeln, die sich auf Informationseigenschaften beziehen, die eine bestimmte darzustellende Information nicht aufweist, können für die Bestimmung der Darstellung dieser bestimmten Information unberücksichtigt bleiben. Eine Anwendung der Darstellungsregeln auf eine Information kann beispielsweise dadurch erreicht werden, dass für die Darstellung der Information Parameter vorgegeben werden und diese entsprechend der generischen Darstellungsregeln instantiiert bzw. verändert werden. Ist eine Information beispielsweise eine Textinformation und in dem Format HTML beschrieben, so können einzelne Attribute entsprechend der durch die generischen Darstellungsregeln vorgegebenen Werte gesetzt werden.

Die Information wird dann an den Client übermittelt und in Abhängigkeit von den generischen Darstellungsregeln dargestellt, so dass die Darstellung folglich bezüglich des vorgegebenen Optimierungsziels optimiert ist.

Diese ermöglicht eine besonders flexible Optimierung von auf einer Netzwerkseite darzustellenden Informationen dadurch, dass die Optimierung besonders einfach unterschiedlichsten Optimierungszielen angepasst werden kann.

Beispielsweise kann das Optimierungsziel zur Reduzierung der Belastung des Kommunikationsnetzwerks tagsüber realisiert werden, wenn davon auszugehen ist, dass die Kommunikationsnetzwerke grundsätzlich stark belastet sind. Nachts oder in den frühen Morgenstunden hingegen werden von Servern häufig rechenintensive Anwendungen oder Backups durchgeführt. In diesen Zeiten kann eine Optimierung beispielsweise mit dem Ziel erfolgen, die Belastung des Servers zu minimieren.

Ferner wird eine Zufallswahrscheinlichkeit ausgewertet und es wird bestimmt, ob mindestens eine generische Darstellungsregel zufällig geändert werden soll. Ergibt die Auswertung, dass eine generische Darstellungsregel geändert werden soll, so wird für diese generische Darstellungsregel mindesten eine Darstellungseigenschaft geändert. Dies wird beispielsweise dadurch erreicht, dass mittels eines Zufallverfahrens mindestens eine Darstellungseigenschaft aus einer vorgebaren Menge ausgewählt wird.

Es wird dann ein optimierte Netzwerkseite dadurch erzeugt, dass die ausgewählten Informationen in Abhängigkeit von den ermittelten Darstellungswerten angeordnet und dargestellt werden.

Gemäß einer vorteilhaften Weiterbildung des erfindungsgemäßen Verfahrens wird in Abhängigkeit von mindestens einer Profilinformation eine generische Darstellungsregel bestimmt, wobei die Profilinformation einem Gruppenprofil oder einem dem Client oder dem Benutzer des Clients zugeordneten Einzelprofil zugeordnet ist. Damit kann ein vorgegebenes Optimierungsziel noch präziser erreicht werden, da sich unterschiedliche Benutzergruppen unterschiedlich verhalten und deshalb eine für diese Benutzergruppen nochmals verfeinerte Darstellung vorteilhaft ist. Beispielsweise kann damit erreicht werden, dass für ältere Personen Informationen in einer größeren Schriftart dargestellt werden, als für jüngere Personen. Handelt es sich bei den darzustellenden Informationen beispielsweise um Kontaktdaten, so kann bei älteren Personen eine Telefonnummer besonders deutlich hervorgehoben werden und es kann vorgesehen sein, wohingegen bei jüngeren Benutzern eine email-Adresse angezeigt wird.

Generische Darstellungsregeln können auch bestimmen, dass eine Information, die eine bestimmte Informationseigenschaft aufweist, nicht oder nur für eine bestimmte Benutzergruppe dargestellt werden soll. Handelt es sich bei dem Server beispielsweise um einen Online-Shop, so kann damit erreicht werden, dass einem männlichen Benutzer nur Herrenbekleidung angezeigt wird, wohingegen einer weiblichen Benutzerin nur Damenbekleidung angezeigt wird.

Hierbei ist es insbesondere vorteilhaft, wenn die zu übermittelnde Information selbst bereits in Abhängigkeit von der Auswertung eines Benutzerprofils ausgewählt wird. Derartige Profilinformationen sind bereits bekannt und beschreiben beispielsweise ein besonderes Interesse, ein Alter, eine Altergruppe, eine soziale Schicht, innerhalb eines bestimmten Zeitraums gekaufte Produkte, einen bei einer Suchmaschine eingegebenen Suchbegriff, eine bevorzugte Farbe, ein bevorzugtes Design für die Darstellung von Informationen auf einer Netzwerkseite oder eine auf dem Client installierte Software. Derartige Profilinformationen können beispielsweise von einem Profilserver zur Verfügung gestellt werden.

Gemäß einer vorteilhaften Ausführungsform wird mittels der ausgewählten Informationen und unter Berücksichtigung der generischen Darstellungsregeln eine optimierte Netwerkseite dynamisch erzeugt und es wird die optimierte Netzwerkseite an den Client übermittelt.

Gemäß einer anderen vorteilhaften Ausführungsform wird mittels der ausgewählten Informationen und unter Berücksichtigung der generischen Darstellungsregeln eine statische Netzwerkseite überarbeitet und die überarbeitete statische Netzwerkseite an den Client übermittelt. Dies hat den Vorteil, dass das Verfahren besonders einfach auf bestehende Informationen und Netzwerkseiten anwendbar ist, da die bestehenden Netzwerkseiten zunächst nicht verändert werden müssen, um überhaupt mittels des erfindungsgemäßen Verfahrens optimiert zu werden. Insbesondere muss den bestehenden Netzwerkseiten kein zusätzlicher Programmcode hinzugefügt werden. Vielmehr werden die bestehenden Netzwerkseiten mittels des erfindungsgemäßen Verfahrens direkt in optimierte Netzwerkseiten dadurch überführt, dass die Darstellungsregeln auf die bestehenden Netzwerkseiten bzw. die darin enthaltenen Informationen angewendet werden und beispielsweise bestimmte, bereits vorhandene Attribute gemäß den generischen Darstellungsregeln überschrieben werden.

Insbesondere werden hierbei statische Netzwerkseiten durch Hinzufügen von den darzustellenden Informationen zugeordneten Darstellungseigenschaften, Ändern von den darzustellenden Informationen zugeordneten Darstellungseigenschaften, Hinzufügen von mindestens einer ausgewählten Information, Entfernen von mindestens einer Informationen und oder durch Ändern der relativen oder absoluten Position einer zu übermittelnden Information überarbeitet. Beispielsweise kann ein einzelner Parameter oder ein diesen Parameter beschreibendes Attribut wie eine Farbe oder ein Font geändert werden oder es kann eine bestimmte Information unterstrichen oder vergrößert dargestellt werden. Dies wird zumindest implizit dadurch erreicht, dass die generischen Darstellungsregeln auf die statischen Netzwerkseiten angewendet werden.

Vorzugsweise wird mindestens eine Darstellungsregel für die Auswahl und Darstellung einer weiteren zu übertragenden Menge von Informationen herangezogen. Hierbei kann zunächst vorgesehen sein, dass die ermittelten generischen Darstellungsregeln, beispielsweise zusammen mit einer Profilinformation und/oder mittels eines so genannten Cookies abgespeichert werden. Fordert der Client weitere Informationen von dem Server an, so werden diese in Abhängigkeit von den zuvor ermittelten und abgespeicherten Darstellungsregeln optimiert. Dies ermöglicht das Anfordern weiterer Informationen von dem Server, ohne dass das Optimierungsverfahren erneut vollständig durchgeführt werden muss. Vielmehr werden die darzustellenden Informationen mit denselben, zuvor ermittelten Darstellungswerten dargestellt.

Vorteilhafterweise wird die optimierte Netzwerkseite automatisch bezüglich eines Optimierungserfolgs bewertet. Der Optimierungserfolg kann beispielsweise die Zeit angeben, die zwischen der Übermittlung der Netzwerkseite und der Anforderung einer weiteren Netzwerkseite vergangen ist. Der Optimierungserfolg kann beschreiben, wie häufig weitere Informationen angefordert worden sind. Der Optimierungserfolg kann ferner angeben, ob und ggf. wie häufig das Anfordern einer Netzwerkseite von einem Online-Shop zum Kauf eines Produkts geführt hat.

Der ermittelte Optimierungserfolg wird mit einem vorgebaren Schwellwert verglichen und in Abhängigkeit von einer sich ergebenden Abweichung des Optimierungserfolgs von dem Schwellwert wird eine dem Optimierungsziel zugeordnete generische Darstellungsregel geändert. Ferner kann beispielsweise die Zufallszahl geändert werden. Dies ermöglicht eine weitere Verbesserung des Optimierungsverfahrens. Insbesondere kann durch die Änderung der Zufallszahl erreicht werden, dass eine automatische Verbesserung des Verfahrens stets möglich ist. Damit kann erreicht werden, dass sich die Verbesserung des Optimierungsverfahrens nicht in einem lokalen Maximum stagniert.

Vorzugsweise wird der Optimierungserfolg mit früheren Optimierungserfolgen bei anderen Darstellungswerten verglichen und es wird bestimmt, welche Darstellungsregeln für einen verbesserten Optimierungserfolg verantwortlich sind. Die dem betreffenden Optimierungsziel zugeordnete Darstellungsregel wird dann entsprechend geändert, so dass standardmäßig die verbesserten Darstellungsregeln dem Optimierungsziel zugeordnet sind.

Die Aufgabe wird auch durch ein Verfahren zur Übermittlung von Informationen von einem Server an einen Client dadurch gelöst, dass die darzustellenden Informationen von dem Server mit dem erfindungsgemäßen Verfahren zur Optimierung der Darstellung der zu übermittelnden Informationen optimiert werden.

Vorzugsweise wird mindestens eine Profilinformation von dem Client an den Server übermittelt und in Abhängigkeit von der Profilinformation die Information ausgewählt, oder es werden in Abhängigkeit von der übermittelten Profilinformation die Darstellungsregeln ermittelt. Dies ermöglicht eine besonders schnellen Reaktion auf aktuelle Profilinformationen, die für die Auswahl und/oder Darstellung von Informationen relevant sind.

Gemäß einer vorteilhaften Weiterbildung des Verfahrens wird die Information durch Aktivierung eines auf einer Ergebnisseite einer Suchmaschine dargestellten Links von dem Server angefordert und es wird mindestens ein Darstellungswert in Abhängigkeit von einem von dem Client an die Suchmaschine übermittelten Suchbegriff ermittelt.

Die Aufgabe wird auch durch ein Client-Server System gelöst, wobei das Client-Server System zur Durchführung des erfindungsgemäßen Verfahrens zur Übermittlung von Informationen eingerichtet ist.

Von besonderer Bedeutung ist die Realisierung dieser Erfindung in Form eines Computerprogramms. Dabei ist das Computerprogramm auf einem Computer beziehungsweise auf einem Client-Server System und insbesondere auf einem Server ablauffähig und zur Ausführung des erfindungsgemäßen Verfahrens programmiert. Insbesondere können zur Ausführung des erfindungsgemäßen Verfahrens Teile des Computerprogramms auf unterschiedlichen Computern beziehungsweise Servern und/oder Clients ablaufen. Die Erfindung wird also durch das Computerprogramm realisiert, so dass dieses Computerprogramm in gleicher Weise die Erfindung darstellt, wie das Verfahren, zu dessen Ausführung das Computerprogramm geeignet ist.

Das Computerprogramm ist vorzugsweise auf einem Speicherelement abgespeichert. Ein Speicherelement kann insbesondere ein Random-Excess-Memory, ein Read-Only-Memory oder ein Flash-Memory sein. Das Computerprogramm kann ferner auf einem dem Server oder mindestens einer Komponente des Client-Server-Systems zugeordneten Speicherbereich abgespeichert sein.

Weitere Anwendungsmöglichkeiten und Vorteile der Erfindung ergeben sich aus der nachfolgenden Beschreibung von Ausführungsbeispielen der Erfindung, die in den Zeichnungen dargestellt sind.

Es zeigen:
- Figur 1: ein Client-Server-System zur Ausführung des erfindungsgemäßen Verfahrens gemäß einer bevorzugten Ausführungsform;
- und Figur 2: eine schematische Darstellung eines Ablaufdiagramms gemäß einer bevorzugten Ausführungsform des erfindungsgemäßen Verfahrens.

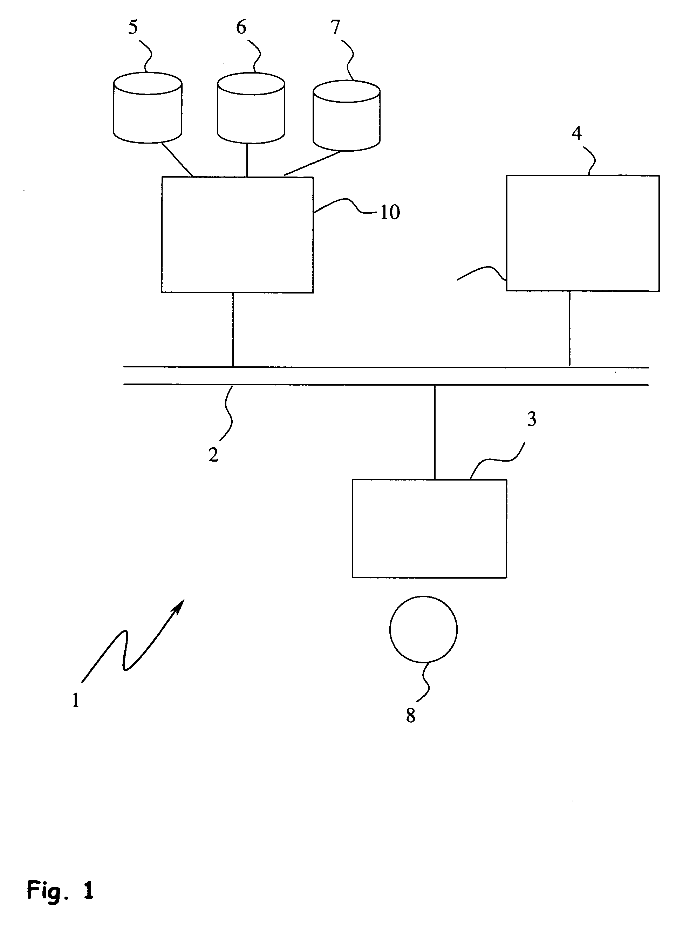

In Figur 1 ist ein Client-Server-System 1 dargestellt, das einen Server 10 aufweist, der über ein Kommunikationsnetzwerk 2 mit einem Client 3 verbindbar ist. Das Client-Server-System 1 weist ferner eine Suchmaschine 4 auf, die mit dem Kommunikationsnetzwerk 2 verbunden ist.

Dem Server 10 ist eine Datenbank 5 zugeordnet, auf der darstellbare Informationen abgespeichert sind. Derartige Informationen können unterschiedlichste Informationsarten umfassen. Vorzugsweise sind in der Datenbank 5 die Informationen derart angeordnet, dass jeder darstellbaren Information mehrere Informationseigenschaften zugeordnet sind. Dem Server 10 ist ferner eine Datenbank 6 zugeordnet, in der Profilinformationen abgespeichert sind. Die Profilinformationen können beispielsweise einem Benutzer 8 des Clients 3 zugeordnet sein. Einige der Profilinformationen können einer Gruppe von nicht dargestellten Benutzern zugeordnet sein, beispielsweise können derartige Profilinformationen Informationen enthalten von männlichen Benutzern eines bestimmten Alters. Insbesondere ist es möglich, dem Client 3 bzw. dem Benutzer 8 des Clients 3 einzelne Profilinformationen zuzuordnen, falls mittels des Clients 3 von dem Server 10 Informationen angefordert werden.

Dem Server 10 ist ferner eine Datenbank 7 zugeordnet. Die Datenbank 7 ermöglicht die Ausgabe von Darstellungsregeln in Abhängigkeit von einer Anfrage. Eine derartige Anfrage kann vorteilhafterweise ein Optimierungsziel beschreiben und mittels einer dem Optimierungsziel zugeordneten Kennung realisiert sein.

Die Suchmaschine 4 sucht in Abhängigkeit von einer mittels des Clients 3 empfangenen Suchanfrage nach Informationen und übermittelt beispielsweise eine die Ergebnisse umfassende Netzwerkseite an den Client 3. Diese Netzwerkseite kann einen Link zu dem Server 10 beziehungsweise zu einer von dem Server 10 zum Abruf bereitgestellten Menge von weiteren Informationen umfassen, die beispielsweise mittels einer statischen Netzwerkseite bei dem Server 10 abgespeichert sind oder in Abhängigkeit von einer Aktivierung des Links durch den Server 10 in einer dynamischen Netzwerkseite zusammengestellt und an den Client 3 übermittelt werden können.

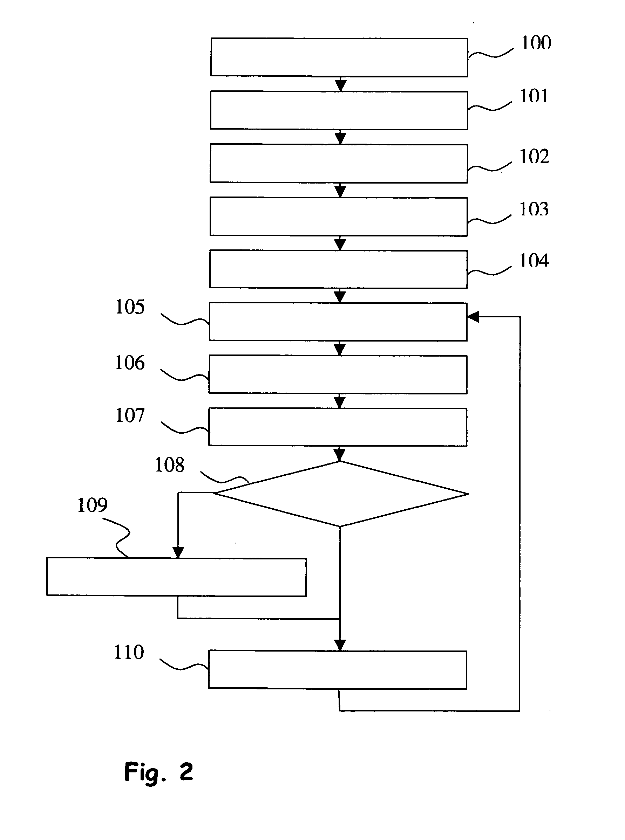

Eine mögliche Ausführung des erfindungsgemäßen Verfahrens ist in Figur 2 dargestellt. In einem Schritt 101 wird von dem Client 3 eine Suchanfrage an die Suchmaschine 4 gestellt, indem ein Suchbegriff an die Suchmaschine 4 übermittelt wird. Die Suchmaschine 4 kann als unabhängige Suchmaschine oder als dem Server 10 zugeordnete Produktsuchmaschine ausgebildet sein.

In einem Schritt 101 wird ein von der Suchmaschine 4 erzeugtes Suchergebnis an den Client 3 übermittelt. Das Suchergebnis enthält insbesondere einen Link zu dem Server 10. Ein derartiger Link kann beispielsweise in Form einer URL (Uniform Resource Locater) angegeben werden.

In einem Schritt 102 wird der Link von dem Client 3 beziehungsweise dem Benutzer 8 aktiviert und es wird automatisch eine Informationsanfrage an den Server 10 übermittelt.

Vorzugsweise wird mit der an den Server 10 gesendeten Informationsanfrage auch der Suchbegriff übermittelt, der mittels des Clients 3 in dem Schritt 100 an die Suchmaschine 4 übermittelt worden ist. Es ist auch vorstellbar, dass Profilinformationen automatisch an den Server 10 übermittelt werden. Die Profilinformationen können beispielsweise bei dem Client 3 in Form eines Cookies abgespeichert sein. Es ist insbesondere vorstellbar, dass die Profilinformationen auf einem spezialisierten Profilserver abgespeichert sind. Hierbei könnte der Client 3 in dem Schritt 102 automatisch eine beispielsweise in einem Cookie abgespeicherte Information an den Server 1 übermitteln, so dass eine Identifizierung des Clients 3 möglich wäre.

In einem Schritt 103 wird in Abhängigkeit von einem vorgegebenen Optimierungsziel eine Menge von generischen Darstellungsregeln ermittelt. Hierzu wird beispielsweise in Abhängigkeit von dem vorgegebenen Optimierungsziel aus der Datenbank 7 eine Liste von generischen Darstellungsregeln ausgewählt.

Die generischen Darstellungsregeln beschreiben damit bestimmte, die Darstellung betreffende Mittel, die besonders gut geeignet sind, das vorgegebene Optimierungsziel zu erreichen. Die generischen Darstellungsregeln beschreiben beispielsweise die Schriftgröße, eine Hintergrundfarbe, eine Schriftfarbe eine absolute Anordnung bezüglich einer Netzwerkseite oder eine Skalierung, beispielsweise für Grafiken. Darstellungsregeln können auch beschreiben, ob aufzählbare Informationen bezüglich eines Merkmals in aufsteigender oder absteigender Reihenfolge aufgezählt werden sollen. Darstellungsregeln können insbesondere auch beschreiben, bezüglich welcher Merkmale eine Aufzählung erfolgen soll. Darstellungsregeln können auch beschreiben, ob zu einer Information eine Zusatzinformation angezeigt werden soll oder ob einzelne Informationsteile verändert werden sollen. Soll beispielsweise der Preis eines Produkts dargestellt werden, so kann vorgesehen sein, den Preis in Abhängigkeit von einem zu erreichenden Optimierungsziel anzupassen.

Grundsätzlich beschreiben generische Darstellungsregeln, wie eine Information dargestellt werden soll, wie eine Information in Beziehung zu anderen Informationen dargestellt werden soll und/oder wo eine Information bezüglich der zu erzeugenden Netzwerkseite dargestellt werden soll. Ferner können generische Darstellungsregeln auch beschreiben, ob eine bestimmte Information überhaupt dargestellt werden soll und ob bzw. welche Zusatzinformationen angezeigt werden sollen.

In einem Schritt 104 wird mindestens eine Profilinformation ausgewertet. Beispielsweise bezeichnet die Profilinformation ein besonderes Interesse des Benutzers 8, der gerade Informationen von dem Server 10 angefordert hat. Ist dies der Fall, so wird beispielsweise durch die Darstellungsregel ein besonderes Design durch Farbwahl, Anordnung und/oder Schriftart erzeugt, das den Benutzer 8 besonders anspricht und diesem beispielsweise die Navigation besonders erleichtert. Hat der Benutzer 8 bereits häufiger Informationen von dem Server 10 angefordert und sind diese Informationen nur gegen Bezahlung erhältlich, so kann vorgesehen sein, dass dem Benutzer 8 ein Rabatt eingeräumt wird oder dem Benutzer 8 ein bestimmtes Produkt zu einem Vorzugspreis oder als Bonus angeboten wird.

In einem Schritt 105 werden die darzustellenden Informationen ermittelt. Dies kann beispielsweise in Abhängigkeit von dem Suchbegriff erfolgen. Ferner kann die Ermittlung der darzustellenden Informationen in Abhängigkeit von einer Profilinformation oder von mehreren Profilinformationen erfolgen. Hierbei werden die Informationen vorzugsweise so ausgewählt, dass diese eine möglichst hohe Relevanz für den Benutzer 8 aufweisen, wozu die Profilinformationen in geeigneter Weise ausgewertet werden. Beispielsweise werden die darzustellenden Informationen vorab bezüglich der möglichen Profilinformationen klassifiziert. Liegen eine oder mehrere Profilinformationen vor, so können die darzustellenden Informationen derart ausgewählt werden, dass diese mit besonders hoher Wahrscheinlichkeit von hohem Interesse für den Benutzer 8 sind.

Die darzustellenden Informationen können auch durch bestehende statische Netzwerkseiten bestimmt sein. Dies kann beispielsweise dann der Fall sein, wenn die Informationsanfrage bei dem Server 10 durch den Client 3 dadurch gestartet wird, dass ein Benutzer 8 des Clients 3 einen auf einer mittels des Client 3 dargestellten Netzwerkseite aktivierbaren Link aktiviert, wobei der Link einer statischen Netzwerkseite zugeordnet ist.

In einem Schritt 106 werden die darzustellenden Informationen unter Berücksichtigung der Darstellungsregeln angeordnet beziehungsweise mit Attributen versehen, so dass diese Informationen mittels einer Netzwerkseite in durch die Darstellungswerte vorgegebener Weise dargestellt werden können. Beispielsweise wird hierbei nun eine Netzwerkseite dynamisch erzeugt bzw. eine bestehende statische Netzwerkseite entsprechend überarbeitet, wobei die Informationen in einer durch die Darstellungsregeln vorgegebenen Reihenfolge, einer bestimmten Schriftgröße oder einer bestimmten Ordnung zueinander angezeigt werden. Durch die generischen Darstellungsregeln kann vorgesehen sein, relevante Informationen unterstrichen darzustellen oder automatisch besonders relevanten Informationen Links zu Zusatzinformationen zuzuordnen. Insbesondere kann vorgesehen sein, dass weitere Links dargestellt werden, mittels der Aktionen durchgeführt werden, von den auszugehen ist, dass der Benutzer 8 diese Aktionen mit hoher Wahrscheinlichkeit ausführen wird. Für derartige Links können beispielsweise automatisch so genannte Action Buttons erzeugt und dargestellt werden.

Für jede Information werden hierbei zunächst die Informationseigenschaften geprüft und es werden jeweils diejenigen generischen Darstellungsregeln für die Information angewendet, die der Informationseigenschaft entsprechen, die also überhaupt anwendbar sind. Beispielsweise kann die Vorgabe einer Schriftgröße für eine Bildinformation nicht umgesetzt werden, jedoch eine Textinformation beeinflussen. Eine generische Darstellungsregeln, die sich auf einen Produktpreis bezieht und eine Unterstreichung vorsieht, kann auf eine Information, die eine Produktbeschreibung darstellt, nicht angewendet werden. Verfahren zur Erkennung solcher Übereinstimmungen sind beispielsweise als matching-Verfahren bekannt und basieren häufig auf Klassifizierungsverfahren, die ebenfalls hinlänglich bekannt sind.

Handelt es sich bei dem Server 10 beispielsweise um einen Online-Shop und zeigt das Profil des Benutzers 8, dass der Benutzer 8 möglichst wenig Produktinformationen wünscht und häufig sofort Produkte bestellt, so kann vorgesehen sein, dass direkt neben dem Produkt ein Link zu einer Bestellseite dargestellt wird. Ist den Profilinformationen hingegen entnehmbar, dass der Benutzer 8 zunächst eine Vielzahl von detaillierten Information und Vergleichsprodukten ansehen will, so können diese sofort auf der Netzwerkseite dargestellt werden.

In einem Schritt 107 werden die Informationen beispielsweise in Form eines HTML-Dokuments von dem Server 1 an den Client 3 übermittelt und dem Benutzer 8 mittels eines auf dem Client 3 installierten Browsers dargestellt.

In einem Schritt 108 wird eine Reaktion des Clients 3 beziehungsweise des Benutzers 8 erfasst und es wird anhand von dieser Reaktion der Optimierungserfolg ermittelt. Weicht dieser von einem vorgebaren Wert ab, so wird in einem Schritt 109 mindestens eine dem Optimierungsziel zugeordnete generische Darstellungsregel geändert. Damit wird erreicht, dass die Darstellung nochmals verbessert wird.

Insbesondere kann auch vorgesehen sein, zufällig eine Darstellungsregel zu ändern oder zufällig mehrere Darstellungsregeln zu ändern. Hierzu kann in Abhängigkeit eines Zufallsverfahrens automatische eine einem Optimierungsziel zugeordnete generische Darstellungsregel geändert werden. Dadurch wird eine nochmalige Verbessung erreicht, da eine automatische Manipulation einer oder mehrer Darstellungsregeln möglich ist. In Abhängigkeit von dem ermittelten Optimierungserfolg kann dann entschieden werden, ob diese veränderte Darstellungsregel beibehalten werden soll, nochmalig verändert werden soll oder zurückgesetzt werden soll.

Ergibt der ermittelte Optimierungserfolg keine Abweichung von dem vorgegebenen Wert, beziehungsweise keine Unterschreitung eines vorgegebenen Schwellwerts, so kann das Verfahren beendet werden oder in dem Schritte 110 fortgesetzt werden.

In dem Schritt 110 kann das Verfahren beendet werden und es kann bei einer erneuten Anforderung von Informationen wieder in dem Schritt 100 gestartet werden.

Vorteilhafterweise wird das Verfahren jedoch dann nicht beendet, wenn eine weitere Informationsanfrage von dem Client 3 an den Server 10 übermittelt wird. Dies kann beispielsweise dadurch erfolgen, dass der Benutzer 8 eine auf der Netzwerkseite dargestellten Link aktiviert. Es ist aber auch möglich, dass der Benutzer nach Stunden, Tagen oder Monaten wieder Informationen von dem Server 10 anfordert. Ist dies der Fall, so kann direkt zu dem Schritt 105 verzweigt bzw. das Verfahren dort gestartet und der Anfrage zugeordnete Informationen ermittelt bzw. eine statische Netzwerkseite ausgewählt werden. Selbstverständlich können hierbei wieder Profilinformationen berücksichtigt werden. Startet das Verfahren nun in dem Schritt 105, so müssen keine neuen Darstellungsregeln ermittelt werden. Ein Fortfahren bzw. Wiedereinsetzen in dem Schritt 105 hat folglich den Vorteil, dass die Ermittlung von Werten für eine optimierte Darstellung nicht für jede Anfrage von Informationen beziehungsweise für jede zu übermittelnde Netzwerkseite gesondert erzeugt werden muss. Vielmehr können die einmal ermittelten Darstellungswerte für weitere von dem Client 3 beziehungsweise dem Benutzer 8 angeforderte Informationen beziehungsweise Netzwerkseiten genutzt werden.

Es ist vorstellbar, dass statisch erzeugte Netzwerkseiten parametrisiert vorliegen, so dass bei einer Anforderung derartiger Netzwerkseiten lediglich die Parameter mit durch die generischen Darstellungsregeln bestimmten Werten versehen werden. Dies ermöglicht, dass die so erzeugte Netzwerkseite bezüglich dem Optimierungsziel und unter Berücksichtigung von dem Client 3 zugeordneten Profilinformation optimiert dargestellt wird.

Insbesondere hat dieses Verfahren den Vorteil, dass auf der erzeugten beziehungsweise zu erzeugenden Netzwerkseite kein zusätzlicher Programmcode hinzugefügt werden muss, der die optimierte Darstellung der Informationen veranlasst. Vielmehr können bestehende Netzwerkseiten unverändert mittels des erfindungsgemäßen Verfahrens optimiert dargestellt werden.

Insbesondere ist mit dem erfindungsgemäßen Verfahren eine Verbesserung der Optimierungsverfahren selbst möglich. Auch hierbei muss der zu übermittelnden Netzwerkseite kein zusätzlicher Programmcode hinzugefügt werden. Damit sind die erfindungsgemäßen Verfahren besonders einfach auch auf bestehenden Servern implementierbar bzw. auf bestehende Informationen und Netzwerkseiten anwendbar. Insbesondere müssen die bestehenden Informationen und Netzwerkseiten grundsätzlich nicht oder nur unwesentlich überarbeitet werden.

Selbstverständlich sind die in den Figuren 1 und 2 dargestellten Ausführungsformen lediglich beispielsweise Ausführungsformen, bei denen eine Vielzahl von Abwandlungen möglich sind.

Beispielsweise kann in Figur 1 zusätzlich ein Profilserver vorgesehen sein, der mit dem Kommunikationsnetzwerk 2 verbunden ist. Ferner können die Datenbanken 5, 6 und 7 selbstverständlich ebenfalls als unabhängige mit dem Kommunikationsnetzwerk 2 verbundene Server realisiert sein. Ferner ist es vorstellbar, dass eine oder mehrere der Datenbanken 5, 6, 7 in Software realisiert sind und/oder beispielsweise nur in einer Tabellenstruktur abgespeichert ist. Ferner können der Server 10, die Suchmaschine 4 und der Client 3 aus einer Vielzahl von zusammenwirkenden Computern bestehen.

In dem in Figur 2 dargestellten Ablaufdiagramm kann beispielsweise vorgesehen sein, dass die Suchmaschine 4 als Produktsaugmaschine realisiert ist. In diesem Fall könnte direkt von dem Schritt 100 zu dem Schritt 103 verzweigt werden, so dass kein besonderer Link zu dem Server 1 an den Client 3 übermittelt werden muss.

Das Verfahren kann auch direkt in dem Schritt 102 damit beginnen, dass mittels des Client 3 eine Anfrage nach Informationen an den Server 10 übermittelt wird. Beispielsweise kann mittels des Client 3 eine dem Server 10 zugeordnete Home-page angefordert werden.

Ausgehend von dem in Figur 2 dargestellten Ablaufdiagramm ist es insbesondere vorstellbar, dass von dem Client 3 bereits Informationen von dem Server 10 angefordert worden sind. Beispielsweise hat der Benutzer 8 bereits zu einem früheren Zeitpunkt eine Home-page von dem Server 10 angefordert.

Ist der Server 10 als Online-Shop ausgebildet, so ist es vorstellbar, dass der Benutzer 8 bereits zu einem früheren Zeitpunkt ein Produkt bei dem Online-Shop gekauft oder dort Informationen zu einem Produkt angefordert hat. In solch einem Fall kann vorgesehen sein, dass die unter Berücksichtigung des Optimierungsziels einerseits und unter Berücksichtigung von Profilinformationen andererseits ermittelten und somit personalisierten Darstellungsregeln bei dem Server 10 oder einem anderen Server abgespeichert werden.

Zusammen mit der erneuten Informationsanforderung sendet der Client 3 nun Informationen, beispielsweise ein Cookie an den Server 10, woraus der Server 10 den Client 3 und/oder den Benutzer 8 identifizieren kann. Selbstverständlich können eine Vielzahl weiterer, dem Fachmann bekannter Techniken zur Identifizierung des Clients 3 und/oder des Benutzers 8 angewendet werden. Ferner kann vorgesehen sein, dass der Benutzer 8 nicht vollständig identifiziert wird, sondern dass lediglich die Zuordnung zu einer Benutzergruppe möglich ist.

Erkennt der Server 10, dass an den Client 3 bereits Informationen übermittelt worden sind oder erkennt der Server 10, dass der Client 3 oder der Benutzer 8 einer Gruppe angehört, für die bereits personalisierte Darstellungsregeln abgespeichert worden sind, so können die personalisierten Darstellungsregeln ausgelesen und auf die zu übermittelnden Informationen angewendet werden. Dies ermöglicht eine besonders schnelle Ausführung des erfindungsgemäßen Verfahrens, da die Häufigkeit der Bestimmung von personalisierten Darstellungsregeln reduziert wird.

Selbstverständliche können einzelne Schritte des in Figur 2 gezeigten Ausführungsbeispiels verändert und/oder in anderer Reihenfolge ausgeführt werden. Beispielsweise kann die Reihenfolge der Schritte 104 und 105 vertauscht werden. Ferner ist es vorstellbar, zunächst nur eine oder wenige Darstellungsregeln zu berücksichtigen, diese auf die ausgewählten Informationen anzuwenden und dann noch weitere Darstellungsregeln zu ermitteln und anzuwenden. Hierbei sind eine Vielzahl von Möglichkeiten der Parallelisierung und/oder Serialisierung vorstellbar.

Ferner ist es vorstellbar, zunächst zu prüfen, ob bereits generalisierte Darstellungsregeln für einen bestimmten Benutzer 8 oder einen einer Benutzergruppe zugehörigen Benutzer 8 abgespeichert sind und nur diejenigen generischen Darstellungsregeln anhand des vorgegebenen Optimierungsziels zu ermitteln, für die noch keine generische Darstellungsregel abgespeichert ist.

## Patentansprüche

1. Verfahren zur Bestimmung der Darstellung von von einem Server (10) an einen Client (3) über ein Kommunikationsnetzwerk (4) zu übermittelnden Informationen, wobei jeder der zu übermittelnden Informationen mindestens eine Informationseigenschaft zugeordnet ist, und bei dem
- in Abhängigkeit von einem vorgebbaren Optimierungsziel automatisch eine Menge von generischen Darstellungsregeln ermittelt wird, wobei mindestens eine der generischen Darstellungsregeln für mindestens eine Informationseigenschaft mindestens eine Darstellungseigenschaft bestimmt;
- mindestens eine generische Darstellungsregel in Abhängigkeit von einer Auswertung mindestens einer Profilinformation automatisch ermittelt oder überarbeitet wird, wobei die Profilinformation einem dem Client (3) oder einem Benutzer (8) des Clients (3) zugeordneten Gruppenprofil oder Einzelprofil zugeordnet ist;
- die Information an den Client (3) übermittelt wird und in Abhängigkeit von der Darstellungseigenschaft dargestellt wird; **dadurch gekennzeichnet, dass** automatisch eine Zufallswahrscheinlichkeit ausgewertet wird und bestimmt wird, ob mindestens eine generische Darstellungsregel zufällig geändert werden soll und falls eine generische Darstellungsregel geändert werden soll, für diese generische Darstellungsregel eine geänderte Darstellungseigenschaft bestimmt wird.

2. Verfahren nach Anspruch 1, **dadurch gekennzeichnet, dass** die geänderte Darstellungseigenschaft bestimmt wird, indem mittels eines Zufallsverfahrens mindestens eine Darstellungseigenschaft aus einer vorgebaren Menge ausgewählt wird.

3. Verfahren nach Anspruch 1 oder 2, **dadurch gekennzeichnet, dass** mindestens eine zu übermittelnde Information in Abhängigkeit von einer Auswertung mindestens einer Profilinformation automatisch ausgewählt wird, wobei die Profilinformation einem dem Client (3) oder dem Benutzer (8) des Clients (3) zugeordneten Gruppenprofil oder Einzelprofil zugeordnet ist.

4. Verfahren nach einem der der vorangehenden Ansprüche, **dadurch gekennzeichnet, dass** mittels der ausgewählten Informationen und unter Berücksichtigung der generischen Darstellungsregeln eine optimierte Netzwerkseite automatisch dynamisch erzeugt wird und die optimierte Netzwerkseite an den Client (3) übermittelt wird.

5. Verfahren nach einem der vorangehenden Ansprüche, **dadurch gekennzeichnet, dass** eine optimierte Netzwerkseite aus einer statischen Netzwerkseite durch
- Hinzufügen von den darzustellenden Informationen zugeordneten Darstellungseigenschaften;
- Ändern von den darzustellenden Informationen zugeordneten Darstellungseigenschaften;
- Hinzufügen von mindestens einer ausgewählten Information;
- Entfernen von mindestens einer Information; oder
- Ändern der relativen oder absoluten Position einer zu übermittelnden Information;
automatisch erzeugt wird.

6. Verfahren nach einem der vorangehenden Ansprüche, **dadurch gekennzeichnet, dass** mindestens eine Darstellungsregel für die Auswahl und Darstellung einer weiteren an den Client (3) oder den Benutzer (8) des Clients (3) zu übertragenden Menge von Informationen automatisch herangezogen wird.

7. Verfahren nach Anspruch 6, **dadurch gekennzeichnet, dass** die mindestens eine Darstellungsregel automatisch abgespeichert wird
- zusammen mit mindestens einer Profilinformation; oder
- in einem dem Client (3) oder dem Benutzer (8) des Clients (3) zugeordneten Speicherbereich.

8. Verfahren nach einem der vorangehenden Ansprüche, **dadurch gekennzeichnet, dass** automatisch ein Optimierungserfolg für die optimierte Netzwerkseite ermittelt wird, der Optimierungserfolg mit mindestens einem vorgebbaren Schwellwert verglichen wird und in Abhängigkeit von einer Abweichung des Optimierungserfolgs von dem Schwellwert mindestens eine dem Optimierungsziel zugeordnete generische Darstellungsregel geändert wird.

9. Verfahren nach einem der vorangehenden Ansprüche, **dadurch gekennzeichnet, dass** automatisch ein Optimierungserfolg für die optimierte Netzwerkseite ermittelt wird, der Optimierungserfolg mit mindestens einem vorgebbaren Schwellwert verglichen wird und in Abhängigkeit von einer Abweichung des Optimierungserfolgs von dem Schwellwert die Zufallszahl geändert wird.

10. Verfahren nach einem der vorangehenden Ansprüche, **dadurch gekennzeichnet, dass** das Optimierungsziel
- eine Verkürzung einer Online-Zeit;
- eine Reduzierung einer zu übertragenden Datenmenge;
- eine Erhöhung der Lesbarkeit;
- eine Reduzierung der Anzahl von weiteren Informationsanforderungen durch den Client (3);
- eine Reduzierung der Belastung des Kommunikationsnetzwerks (4);
- eine Reduzierung der Belastung des Servers (10);
anstrebt.

11. Verfahren nach einem der vorangehenden Ansprüche, **dadurch gekennzeichnet, dass** mindestens eine Informationseigenschaft
- eine Informationsart;
- einen Themenbereich;
- eine Produktart;
- eine Aufzählbarkeit;
- eine Priorität;
beschreibt.

12. Verfahren zur Übermittlung von Informationen von einem Server (10) an einen Client (3), bei dem von dem Server (10) in Abhängigkeit von einer Informationsanforderung zu übermittelnde Informationen ausgewählt werden, wobei
- mindestens eine dem Client (3) oder einem Benutzer (8) des Clients (3) zugeordnete Profilinformation ausgewertet wird und geprüft wird, ob für den Client (3) oder den Benutzer (8) des Clients (3) eine bestehende Menge von generischen Darstellungsregeln anwendbar ist;
- falls eine bestehende Menge von generischen Darstellungsregeln anwendbar ist, in Abhängigkeit von den generischen Darstellungsregeln mindestens eine Darstellungseigenschaft mindestens einer zu übermittelnden Information vorgegeben wird, die Information an den Client (3) übermittelt wird und in Abhängigkeit von der Darstellungseigenschaft dargestellt wird;
- falls keine bestehende Menge von generischen Darstellungsregeln anwendbar ist, in Abhängigkeit von einem vorgebbaren Optimierungsziel automatisch eine Menge von generischen Darstellungsregeln ermittelt wird und in Abhängigkeit von den generischen Darstellungsregeln mindestens eine Darstellungseigenschaft mindestens einer zu übermittelnden Information vorgegeben wird, die Information an den Client (3) übermittelt wird und in Abhängigkeit von der Darstellungseigenschaft dargestellt wird;
**dadurch gekennzeichnet, dass** die Auswahl und Darstellung mindestens einer zu übermittelnden Information mit einem Verfahren nach einem der Ansprüche 1 bis 11 durchgeführt wird.

13. Verfahren nach Anspruch 12, **dadurch gekennzeichnet, dass** mindestens eine Profilinformation zusammen mit der Informationsanforderung
- von dem Client (3)
- von einem weiteren Server
an den Server (10) übermittelt wird.

14. Verfahren nach Anspruch 12 oder 13, **dadurch gekennzeichnet, dass** die Information durch Aktivierung eines auf einer Ergebnisseite einer Suchmaschine (4) dargestellten Links von dem Server (10) angefordert wird und mindestens eine Darstellungsregel in Abhängigkeit von mindestens einem von dem Client (3) an die Suchmaschine (4) übermittelten Suchbegriff ermittelt wird.

15. Server (10) in einem Client-Server System (1), **dadurch gekennzeichnet, dass** der Server (10) Mittel zur Durchführung eines Verfahrens nach einem der Ansprüche 1 bis 11 aufweist.

16. Client-Server System (1), das einen Server (10) und einen über ein Kommunikationsnetzwerk (4) mit dem Server (10) verbindbaren Client (3) umfasst, **dadurch gekennzeichnet, dass** das Client-Server System (1) Mittel zur Durchführung eines Verfahrens nach einem der Ansprüche 1 bis 11 aufweist.

17. Computerprogramm, das auf einem Client-Server System (1), insbesondere auf einem Server (10), ablauffähig ist, **dadurch gekennzeichnet, dass** ein Verfahren nach einem der Ansprüche 1 bis 14 ausgeführt wird, wenn das Computerprogramm auf dem Client-Server System (1) abläuft.

18. Computerprogramm nach Anspruch 17, **dadurch gekennzeichnet, dass** das Computerprogramm auf einem Speicherelement abgespeichert ist, wobei das Speicherelement als ein Read-Only-Memory (ROM), ein Random-Access-Memory (RAM) oder mindestens ein mindestens einer Komponente des Client-Server Systems (1) zugeordnetes Speicherelement ausgebildet ist.

## Claims

1. Method of defining the display of items of information to be transmitted from a server (10) to a client (3) over a communications network (4), each of the items of information to be transmitted having at least one information attribute associated with it, in which method
- a set of generic rules governing display are determined automatically as a function of a presettable aim of optimisation, with at least one of the generic rules governing display defining at least one display attribute for at least one information attribute;
- at least one generic rule governing display is determined or revised automatically as a function of an analysis of at least one item of profile information, the item of profile information being associated with a group profile or individual profile associated with the client (3) or a user (8) of the client (3);
- the information is transmitted to the client (3) and is displayed as a function of the display attribute;
**characterised in that** a chance probability is assessed automatically and it is defined automatically whether at least one generic rule governing display is to be altered in a random manner and, if a generic rule governing display is to be altered, an altered display attribute is defined for this generic rule governing display.

2. Method according to claim 1, **characterised in that** the altered display attribute is defined by selecting at least one display attribute from a presettable set by a chance-based procedure.

3. Method according to claim 1 or 2, **characterised in that** at least one item of information to be transmitted is selected automatically as a function of an analysis of at least one item of profile information, the item of profile information being associated with a group profile or individual profile associated with the client (3) or the user (8) of the client (3).

4. Method according to one of the preceding claims, **characterised in that** an optimised network page is generated, automatically and dynamically, by means of the item of information selected and with due regard for the generic rules governing display, and the optimised network page is transmitted to the client (3).

5. Method according to one of the preceding claims, **characterised in that** an optimised network page is generated automatically from a static network page by
- adding display attributes associated with the items of information to be displayed,
- altering display attributes associated with the items of information to be displayed,
- adding at least one selected item of information,
- removing at least one item of information, or
- altering the relative or absolute position of an item of information to be transmitted.

6. Method according to one of the preceding claims, **characterised in that** at least one rule governing display for the selection and display of a further set of items of information to be transmitted to the client (3) or the user (8) of the client (3) is consulted automatically.

7. Method according to claim 6, **characterised in that** the at least one rule governing display is stored automatically
- together with at least one item of profile information, or
- in a storage area associated with the client (3) or the user (8) of the client (3).

8. Method according to one of the preceding claims, **characterised in that** a success of the optimisation is determined automatically for the optimised network page, the success of the optimisation is compared with at least one presettable threshold value, and at least one generic rule governing display associated with the aim of optimisation is altered as a function of a deviation by the success of the optimisation from the threshold value.

9. Method according to one of the preceding claims, **characterised in that** a success of the optimisation is determined automatically for the optimised network page, the success of the optimisation is compared with at least one presettable threshold value, and the random number is altered as a function of a deviation by the success of the optimisation from the threshold value.

10. Method according to one of the preceding claims, **characterised in that** aim of optimisation aims at
- a shortening of a time online,
- a reduction in a data set to be transmitted,
- an increase in legibility,
- a reduction in the number of further information requests by the client (3),
- a reduction in the load on the communications network (4),
- a reduction in the load on the server (10).

11. Method according to one of the preceding claims, **characterised in that** at least one information attribute describes
- a type of information,
- a subject area,
- a type of product,
- an enumerability,
- a priority.

12. Method of transmitting items of information from a server (10) to a client (3), in which items of information to be transmitted are selected by a server (10) as a function of an information request, and in which
- at least one item of profile information associated with the client (3) or a user (8) of the client (3) is analysed and it is checked whether an existing set of generic rules governing display can be used for the client (3) or the user (8) of the client (3); and
- if an existing set of generic rules governing display can be used, at least one display attribute of at least one item of information to be transmitted is preset as a function of the generic rules governing display, and the item of information is transmitted to the client (3) and is displayed as a function of the display attribute;
- if no existing set of generic rules governing display can be used, a set of generic rules governing display is determined automatically as a function of a presettable aim of optimisation and at least one display attribute of at least one item of information to be transmitted is preset as a function of the generic rules governing display, and the item of information is transmitted to the client (3) and is displayed as a function of the display attribute,
**characterised in that** the selection and display of at least one item of information to be transmitted are carried out by a method according to one of claims 1 to 11.

13. Method according to claim 12, **characterised in that**, together with the information request, at least one item of profile information is transmitted to the server (10)
- from the client (3)
- from a further server.

14. Method according to claim 12 or 13, **characterised in that** the item of information is requested from the server (10) by the activation of a link displayed on a results page of a search engine (4), and at least one rule governing display is determined as a function of at least one search term transmitted to the search engine (4) from the client (3).

15. Server (10) in a client-server system (1), **characterised in that** the server (10) has means for carrying out a method according to one of claims 1 to 11.

16. Client-server system (1) which comprises a server (10) and a client (3) which can be connected to the server (10) via a communications network (4), **characterised in that** the client-server system (1) has means for carrying out a method according to one of claims 1 to 11.

17. Computer program able to be run on a client-server system (1) and in particular on a server (10), **characterised in that** a method according to one of claims 1 to 14 is carried out if the computer program is run on the client-server system (1).

18. Computer program according to claim 17, **characterised in that** the computer program is stored on a memory member, the memory member taking the form of a read-only memory (ROM), a random-access memory (RAM) or at least one memory member associated with at least one component of the client-server system (1).

## Revendications

1. Méthode pour déterminer la représentation d'informations à transmettre à un client (3) depuis un serveur (10) par l'intermédiaire d'un réseau de communication (4), dans laquelle au moins une propriété d'information est associée à chacune des informations à transmettre, et dans laquelle
- en fonction d'une cible d'optimisation prédéterminée, une multitude de règles de représentation génériques est établie automatiquement, de sorte qu'au moins une des règles de représentation génériques détermine au moins une propriété de représentation pour au moins une propriété d'information ;
- au moins une règle de représentation générique va être établie ou remaniée automatiquement en fonction d'une évaluation d'au moins une information de profil, de sorte que l'information de profil est associée à un profil de groupe associé à un client (3) ou à un utilisateur (8) du client (3), ou à un profil individuel ;
- l'information est transmise au client (3), et est représentée en fonction de la propriété de représentation ;
**caractérisée en ce qu'**une probabilité aléatoire est évaluée automatiquement, et la nécessité de modifier au moins une règle de représentation générique est déterminée, et si une règle de représentation générique doit être modifiée, une propriété de représentation modifiée est déterminée pour cette règle de représentation générique.

2. Méthode selon la revendication 1, caractérisée en ce la propriété de représentation modifiée va être déterminée, dans laquelle, par l'intermédiaire d'une méthode aléatoire, au moins une propriété de représentation va être choisie parmi plusieurs prédéterminées.

3. Méthode selon la revendication 1 ou 2, **caractérisée en ce qu'**au moins l'une des informations à transmettre est sélectionnée automatiquement en fonction d'une évaluation d'au moins une information de profil, de sorte que l'information de profil est associée à un profil de groupe associé à un client (3) ou à un utilisateur (8) du client (3), ou à un profil individuel

4. Méthode selon l'une quelconque des revendications précédentes, **caractérisée en ce qu'**au moyen des informations sélectionnées et en tenant compte des règles de représentation génériques, une page de réseau optimisée est générée automatiquement et de manière dynamique, et la page de réseau optimisée est transmise au client (3).

5. Méthode selon l'une quelconque des revendications précédentes, **caractérisée en ce qu'**une page de réseau optimisée est générée automatiquement à partir d'une page de réseau statique, par
- ajout de propriétés de représentation associées aux informations représentées ;
- modification des propriétés de représentation associées aux informations représentées ;
- ajout d'au moins une information sélectionnée ;
- retrait d'au moins une information ; ou
- changement de la position relative ou absolue des informations transmises.

6. Méthode selon l'une quelconque des revendications précédentes, **caractérisée en ce qu'**au moins une règle de représentation va être utilisée automatiquement pour la sélection et la représentation d'une information parmi une multitude d'informations à transmettre au client (3) ou à l'utilisateur (8) du client (3).

7. Méthode selon la revendication 6, **caractérisée en ce que** la au moins une règle de représentation est sauvegardée automatiquement avec
- au moins une information de profil ; ou
- dans une zone de sauvegarde associée au client (3) ou à l'utilisateur (8) du client (3).

8. Méthode selon l'une quelconque des revendications précédentes, **caractérisée en ce que** le résultat de l'optimisation est déterminé automatiquement pour la page de réseau optimisée, le résultat de l'optimisation est comparé à au moins une valeur de seuil prédéterminée, et au moins une règle de représentation générique associée à une cible d'optimisation est modifiée en fonction de l'écart du résultat d'optimisation par rapport à la valeur de seuil.

9. Méthode selon l'une quelconque des revendications précédentes, **caractérisée en ce que** le résultat de l'optimisation est déterminé automatiquement pour la page de réseau optimisée, le résultat de l'optimisation est comparé à au moins une valeur de seuil prédéterminée, et en fonction de l'écart du résultat d'optimisation par rapport à la valeur de seuil, le nombre aléatoire est modifié.

10. Méthode selon l'une quelconque des revendications précédentes, **caractérisée en ce que** la cible d'optimisation tend vers
- un raccourcissement du temps passé en ligne ;
- une réduction d'une quantité de données à transmettre ;
- une augmentation de la lisibilité ;
- une réduction du nombre de demandes d'informations supplémentaires par le client (3) ;
- une réduction de la charge du réseau de communication (4) ;
- une réduction de la charge du serveur (10).

11. Méthode selon l'une quelconque des revendications précédentes, **caractérisée en ce qu'**au moins une propriété d'information décrit
- un type d'information ;
- un domaine thématique ;
- un type de produit ;
- une énumérabilité ;
- une priorité.

12. Méthode pour transmettre des informations à un client (3) depuis un serveur (10), dans laquelle des informations devant être transmises depuis le serveur (10) vont être sélectionnées en réponse à une demande d'informations, de sorte que
- au moins une information associée à un client (3) ou à un utilisateur (8) du client (3) est évaluée, et l'applicabilité d'un ensemble existant de règles de représentation génériques au client (3) ou à l'utilisateur (8) du client (3) est vérifiée ;
- si un ensemble existant de règles de représentation génériques est applicable, en fonction des règles de représentation génériques, au moins une propriété de représentation d'au moins une information à transmettre est spécifiée, l'information est transmise au client (3), et est représentée selon la propriété de la représentation ;
- si aucun jeu existant de règles de représentation génériques n'est applicable, un ensemble de règles de représentation génériques est déterminé automatiquement en fonction d'une cible d'optimisation prédéfinie, et en fonction des règles de représentation génériques, au moins une propriété de présentation d'au moins une information à transmettre est spécifiée, l'information est transmise au client (3), et est représentée selon la propriété de représentation ;
**caractérisée en ce que** la sélection et la représentation d'au moins une information à transmettre sont réalisées par l'intermédiaire d'une méthode selon l'une quelconque des revendications 1 à 11.

13. Méthode selon la revendication 12, **caractérisée en ce qu'**au moins une information de profil est reçue sur le serveur (10) en même temps que la demande d'information
- provenant du client (3)
- provenant d'un autre serveur.

14. Méthode selon la revendication 12 ou 13, **caractérisée en ce que** l'information est demandée par l'activation d'un lien représenté sur une page de résultat d'un moteur de recherche (4) depuis le serveur (10), et au moins une règle de présentation est déterminée en fonction d'au moins un mot-clé transmis au moteur de recherche (4) par le client (3).

15. Serveur (10) dans un système client-serveur (1), **caractérisé en ce que** le serveur (10) comporte des moyens pour exécuter une méthode selon l'une quelconque des revendications 1 à 11.

16. Système client-serveur (1) comprenant un serveur (10) et un client (3) pouvant être connecté au serveur (10) via un réseau de communication (4), **caractérisé en ce que** le système client-serveur (1) présente des moyens pour exécuter une méthode selon l'une quelconque des revendications 1 à 11.

17. Programme informatique, qui peut tourner sur un système client-serveur (1), en particulier sur un serveur (10), **caractérisé en ce qu'**une méthode selon l'une quelconques des revendications 1 à 14 est exécutée lorsque ledit programme informatique tourne sur le système client-serveur (1).

18. Programme informatique selon la revendication 17, **caractérisé en ce que** le programme informatique est sauvegardé sur un élément de sauvegarde, dans lequel l'élément de sauvegarde est conçu sous la forme d'une mémoire morte (ROM), d'une mémoire vive (RAM) ou d'au moins un élément de sauvegarde associé à au moins une composante du système client-serveur (1).
